# EUROPEAN PATENT APPLICATION

(11) **EP 1 639 887 A1**
(43) Date of publication of application: **29.03.2006**
(21) Application number: 05108807.8
(22) Date of filing: 23.09.2005
(51) Int. Cl.: A01G 23/06

(54) **Device and method for handling stumps**

(30) Priority: 23.09.2004 FI 20041230
(71) Applicant: OY Kappelinranta-Kapelstrand AB, 21630 Lielax (FI)
(72) Inventor: Järvinen, Markku, 21630 Lielax (FI)
(74) Representative: Maskula, Silla Marjatta

(57) **Abstract**

The invention comprises a device (10) and a method for handling stumps. The device for handling stumps (10) comprises a frame (3) and, attached thereto, coupling means (37) for coupling the handling device to a work machine, a rotator (11) for turning the handling device in relation to a work machine, first gripping means (1) for gripping a stump, first cutting means (21) that are arranged at a distance from the first gripping means as well as power means (5, 25) for directing operating power from outside the handling device to the first gripping means and to the first cutting means. In the method, a stump is gripped by the gripping means (1, 1') of the handling device, and parts of the root that are meant to be removed from the stump, are cut by means of a cutting blade (38) in the handling device (10). After that, the part of the stump held by the gripping means (1, 1') of the handling device is transferred to a stump transport device.

## Description

### TECHNICAL FIELD RELATED TO THE INVENTION

The object of the invention is a device and a method for handling stumps according to the preambles of the independent claims presented further below.

### PRIOR ART

When utilising wood energy, suitable combustion plants for efficient usage of wood energy as well as methods for acquiring and collecting raw materials used for combustion have been developed during the recent years. Suitable wood material for energy production is produced when logging forests, for example, provided that the produced logging waste, such as stumps, is collected and transported to a combustion plant. Trunk parts as well as main roots of the stumps, for example, contain such an amount of energy, that it is worthwhile to transport them to energy production. It is, however, only for a short period of time that stumps have been collected for energy production raw material. Until today, focus has been on developing and constructing the necessary combustion technique. Less focus has been put on the problems related to raw material acquisition.

Nowadays, when logging forests, stumps are levered from the ground by means of so-called stump clamps connected to the booms of excavators. After drying, stumps are transported with forest tractors on the side of a road for further drying and for later onward transport. A main problem related to transportation of the stumps is that when loading stumps on a lorry, for example, only about 30% of the total transport capacity of a combination vehicle is really used. Stumps cannot be loaded tightly, and plenty of empty transport space is left in a load, because main roots of a single dried stump as well as branches of the main roots are pointing all in different directions and inevitably get tangled with respective roots of other stumps. Thin stump roots bear a small importance on energy production, but they take up a large part of a load capacity. Stump roots cannot be cut with an ordinary grapple intended for loading timber. Nowadays, the aim has been to solve the problem by pressing the root system into a smaller space. This does not either eliminate the problem, because the space requiring root system is elastic and restores almost into its former space after pressing.

Another problem of prior art is the fact that a lot of soil and rock material is left in the stump root system, and it cannot sufficiently be removed with present methods. Both materials hinder crushing of stumps. At the worst, rock material may even cause breakage of the crusher. Excessive soil and rock material among the crushed stumps reduces operation of the modern so-called fluidised-bed burners that are generally used.

### AIMS OF THE INVENTION

The main object of the present invention is to reduce or even to eliminate the problems appearing in the prior art described above.

It is an aim of the present invention to accomplish especially such a device and method for handling stumps, by means of which the loading space in both a forest tractor and in a lorry used for road transportation or in the like transport device can be filled more efficiently than by means of prior art methods.

Another aim of the present invention is to accomplish especially such a device and method for handling stumps, that a stump ton finished by means of it contains more hard wood useful for energy production, thus improving energy production.

Another third aim of the present invention is to accomplish especially such a device and method for handling stumps, that a stump ton finished by means of it does not contain such an amount of rock and soil material, that would have a harmful effect on the transportation capacity or would reduce the power of crushing devices or the functioning of combustion plants.

### DESCRIPTION OF THE INVENTION AND SOME EMBODIMENTS THEREOF

In order to realise the objects mentioned above, among other things, the device and method for handling stumps according to the invention are characterised by what is presented in the characterising parts of the enclosed independent claims.

The embodiment examples and advantages mentioned in this text are in suitable parts applicable to both a device and a method for handling stumps according to the invention, even if this is not always specifically mentioned.

A typical device for handling stumps according to the invention comprises a frame and, attached thereto,
- coupling means for coupling the handling device to a work machine,
- a rotator for turning the handling device in relation to the work machine,
- first gripping means for gripping a stump,
- first cutting means, which are arranged at a distance from the first gripping means,
- power means for directing operating power from outside the handling device to the first gripping means and to the first cutting means.

In a typical method for handling stumps according to the invention, stumps that have been extracted from the ground are transferred to a stump transport device by a handling device coupled to a work machine. In the method, a stump is gripped by the gripping means of the handling device, parts of root that are meant to be removed from the stump, are cut by a cutting blade in the handling device, and the part held by the gripping means of the handling device is transferred to the stump transport device.

It has now been surprisingly found, that the problems related to transportation of the stumps that are extracted from logging areas, can simply be solved by cutting most part of the roots of the stumps to be transported prior to loading them in the loading space. This can be easily performed totally by machine, by using the device for handling stumps according to the invention. At the same time, it is possible to reduce the amount of harmful soil and rock material travelling along with the stumps and getting to a combustion plant. One highly significant advantage of the present invention is that stump transport capacity increases as far as both the transportation to the side of a road and the road transportation to a combustion plant are concerned. It has been assumed, that by means of the invention, stump transport capacity is increased over 50 % from the present situation for both transport chains.

According to one advantageous embodiment of the present invention, the handling device comprises a frame part made of steel beam, at the other end of which frame part gripping means, such as scissor-like steel hooks, are attached in an articulated manner. These gripping means can be moved to 'open' and 'closed' positions in relation to each other by means of power means, for example a double-acting hydraulic cylinder. Respectively, cutting means have been attached to the other end of the frame. Advantageously, the cutting means are scissor means, such as scissor-like steel hooks, arranged to be used with power means, the inner surface of one of the hooks being sharpened to cut.

In a working method according to one embodiment of the invention, the device for handling stumps is arranged onto the root to be handled so that both the cutting and the gripping means are in 'open' position. The stump is gripped by the gripping means at a suitable point. Already at this stage, it can be estimated at which point of the roots of the stumps to be handled are wished to be cut, and the cutting means can be transferred to the point in question above the stump. The cutting means are squeezed around the root or the roots to be cut and the cutting blades are pressed together. In case other parts of the stump do not need further treatment, that is cutting, the stump is vibrated by a vibrator for loosening of possibly stuck soil material, and the stump is lifted to a loading space. The vibrator can be used at all working stages according to need, also prior to cutting parts of the stump with the cutting means.

The manner described above can also be used in case the device for handling stumps comprises two or more cutting means. First, the part of the stump to be collected is estimated, and the cutting means are set on the cutting points of the stump. The main part of the stump to be handled is gripped by the gripping means, and is vibrated for loosening of soil material. Prior to using the vibrator, some cutting or gripping means is advantageously to be arranged around the stump to be handled in a 'closed' position, that is to take a gripping hold.

According to an advantageous embodiment of the invention, a hydraulically functioning rotator has been fixed approximately to the central part of the frame of the device for handling stumps, by means of which rotator the device can be arranged to a power source, for example to the boom of a hydraulic lifting device of a forest tractor to replace a so-called wood grapple. By means of the rotator, the handling device can be arranged in a correct position in relation to both the forest machine and the stump to be handled.

According to an embodiment of the invention, the device for handling stumps comprises second cutting means. Thus, the first and the second cutting means can be arranged on different sides of the gripping means, that is on both ends of the frame of the handling device there are arranged cutting means, and between them there are arranged gripping means, by means of which the stump to be handled can be gripped on about its middle section. Thereby, the stump roots can be cut at a suitable point by means of the first cutting means, and the stump can be shortened from its trunk end by means of the second cutting means, for example in case that the stump is too long as far as the transportation is concerned. In this embodiment of the invention, the butt part of the stump can be split into several pieces by the cutting means, which further facilitates the loading of stump parts to the loading space and improves the achievable space saving.

Such a device for handling stumps according to the invention that comprises only one cutting means can also be used to shorten the trunk part of a stump. Thus, the stump is gripped by the gripping means and the root system is shortened to a suitable length by the cutting means. After this, the stump is lowered to the ground, the device for handling stumps is turned 180º in relation to the stump by means of the rotator and the stump is gripped again by the gripping means. In relation to the stump, the cutting means are now situated at the trunk end of it, which trunk end can be shortened by said cutting means as desired.

In another embodiment of the invention, the handling device comprises two cutting means, whereby the second cutting means of which replace the first gripping means. The second cutting means may be substantially less sharp than the first cutting means, whereby they can simultaneously act also as the first gripping means. Despite the fact that the second cutting means are less sharp, the cutting power generated to the cutting means by the power means is still sufficient for cutting the stump roots. Thus, according to this embodiment, only two scissor-like cutting means can be fixed to the frame of the handling machine, one of which cutting means also acts as gripping means.

A device for handling stumps according to an embodiment further comprises second gripping means for gripping a stump. The second gripping means can also be used as scissor-like cutting means, if they are arranged with cutting surfaces suitable for the purpose.

Special cutting blades can be arranged to the gripping means or next to them. For example, a cutting blade can be attached in an immovable manner to a gripping means or in its immediate vicinity, the gripping means being arranged to the frame of a device in a movable manner. Such a cutting blade should be sufficiently strong. The cutting blade is possibly mainly parallel with the moving direction of the gripping means, and a plate-like object. Such a cutting blade can be placed so that when the gripping means are in the 'closed' position, it would cover at least a substantial part of the space that is otherwise left between the gripping means. The gripping means could thus be used for cutting the material in the gripping means by pressing the gripping means close to its 'closed' position. Such a gripping means and cutting blade are easily arranged so that when the gripping means is in the 'open' position, or at least far from the 'closed' position, the cutting blade does not substantially exert its cutting power on the material in the gripping means. Therefore, in one embodiment of the invention, a movably arranged cutting means is not necessary. The cutting means can be an immovably arranged cutting blade, against which the material in the gripping means could be pressed, and thereby, exposed to the cutting power of the cutting blade.

In an embodiment of the invention, the actuators of the device for handling stumps, that is the gripping means and/or the cutting means, are placed in parallel with respect to their working positions. This means, for example, that the spaces left between the jaws of the gripping means and/or the cutting means are in the same line. Thereby, the movably arranged jaws of different actuators of the same device for handling stumps are typically arranged movable around the parallel axes. The stump to be handled is easily placed to such an empty space between the jaws of the device for handling stumps, and in this space the stump can be worked easily.

The size of the device for handling stumps according to the invention may be arranged so as to suit the application at hand. In one embodiment of the invention, the largest distance between those actuators of the device for handling stumps, that are farthest away from each other, that is the gripping means and/or the cutting means, is 100-400 cm, typically 120-300 cm, advantageously 120-250 cm. The length of the frame of the handling device is typically approximately the same as the above mentioned largest distance between the actuators.

In an advantageous embodiment of the invention, the device for handling stumps comprises transfer means for transferring gripping means and/or cutting means in relation to each other and/or to the frame. Typically, the distance between the gripping means and the cutting means is about 60 ― 100 cm. It is obvious, that the length of the frame of the handling device can be even remarkably longer than this distance. For example, in the embodiments comprising three actuators, for example two cutting means arranged on opposite sides of the gripping means, the distance from the gripping means for both cutting means is about 60―100 cm, that is the length of the frame and the largest distance between the actuators is about 120―250 cm. By means of the transfer means, the cutting means and/or the gripping means can be moved in a stepless manner along the bar-like frame of the handling device, whereby the distance between the cutting means and the gripping means can be adjusted in a flexible manner to the length of the stump to be handled.

In an embodiment of the invention, thin root parts, less than 10 cm of thickness, advantageously less than about 5 cm, that are less significant in view of energy production, are cut from the stump. The part of the stump to be handled is gripped by means of the gripping means of the handling device, such as gripping hooks, so that main part of the thin root parts meant to be removed can be cut at a suitable distance by means of the cutting means, such as a cutting blade. The cut off roots can be left in the logging area where they will form an advantageous biotope for different plant, animal and/or insect species. If needed, the cut root parts can also be collected and utilized in other processes.

In an embodiment of the method according to the invention, the stump is gripped by the first gripping means of the handling device, that is by means of pliers means, and, alternatively, also by the first cutting means, so that the gripping and/or cutting means being in 'open' position, are moved towards each other, whereby the means will arrange around the trunk part of the stump to be handled and get a hold of it. The stump is then lifted supported by the gripping and/or cutting means. The cutting means are moved further towards each other, whereby they are pressed together at such a strength that the root parts of the stump meant to be removed will come loose.

In another embodiment of the method according to the invention, the stump meant to be handled is left in place on the ground, where useless root parts of it are cut by using the cutting means, i.e. the scissor means. After this, the stump is lifted on a loading space by means of the gripping means. The cutting means can be designed so that they can be used for splitting the butt part of the stump in several parts, if needed.

According to an advantageous embodiment of the invention, the device for handling stumps comprises a vibrator, which is arranged to vibrate the trunk and/or the gripping means. Vibrator can be used for removing or reducing the amount of soil stuck on the stump and on its roots, which facilitates further processing of the stump at the combustion plant. Among other things, removing excess soil reduces wearing of the blades used for chopping and reduces the combustion efficiency diminishing soil and rock material that gets to the combustion plant.

In a method according to the invention, the part of the stump held by the gripping means of the handling device is moved while it is against the ground, levelling thus unevenness of the ground, such as a pit remaining in the place of the extracted stump. Thereby, separate working steps are not necessarily needed for levelling the pits that are created by extracting the stumps. Levelling the pits at least partly remarkably facilitates other forthcoming forestry procedures, such as ploughing and/or planting new tree plants.

The device for handling stumps according to the invention can simply and easily be connected to the booms of the loading devices in both forest machines and vehicles transporting timber or stumps. Weight of the handling device is only part of the weight of a so-called harvester head, whereby it can be used also in light forest tractors.

The device for handling stumps according to the invention can also be used for clearing so-called weed tree away from logging roads. Thus, cleared weed tree can be cut in shorter pieces by the handling device, whereby weed tree can be loaded in a smaller space. In addition, the handling device according to the invention can be used for cutting and loading so-called energy wood that is not suitable for pulpwood, such as willow tree. The device and method according to the invention can also be used for cutting bales of brushwood to size and for loading them to a loading space of a truck, for example.

### BRIEF DESCRIPTION OF THE FIGURES

The invention is described in more detail below with reference to the enclosed schematic drawing, in which
- Fig. 1A: shows a gripping means of the device for handling stumps according to the invention in 'open' position,
- Fig. 1B: shows the gripping means of the device for handling stumps according to the figure 1A in 'closed' position,
- Fig. 2A: shows a cutting means of the device for handling stumps according to the invention in 'open' position,
- Fig. 2B: shows the cutting means of the device for handling stumps according to the figure 2A in 'closed' position,
- Fig. 3: shows a device for handling stumps according to the invention as seen from the front, and
- Fig. 4: shows the device for handling stumps according to the Fig. 3 seen from above.
- Fig. 5: shows another device for handling stumps according to the invention as seen from the side, and
- Fig. 6: shows the device for handling stumps according to the Fig. 5 in a perspective view.

Corresponding parts have the same reference numerals.

Figure 1A shows a gripping means of a device for handling stumps according to the invention in 'open' position. The gripping means 1 comprises a cogged first jaw 2 and a non-cogged second jaw 2'. The cogged first jaw 2 is arranged in the frame beam 3 in a fixed manner. The jaws 2, 2' are joined to each other by a joint 4, whereby they can be moved in relation to each other towards each other. The second jaw 2' is arranged in a functional connection with the cylinder 5. Thus, the jaw 2' can be moved towards the jaw 2 around a joint 4 by means of the cylinder 5. In Figure 1A, the gripping means 1 is shown in 'open' position, where gripping surfaces 6, 6' of the jaws 2, 2' are as far from each other as possible. When gripping a stump to be handled, the stump is arranged between the gripping surfaces 6, 6' of the jaws 2, 2', and the jaw 2' is moved towards the jaw 2 by means of the cylinder 5.

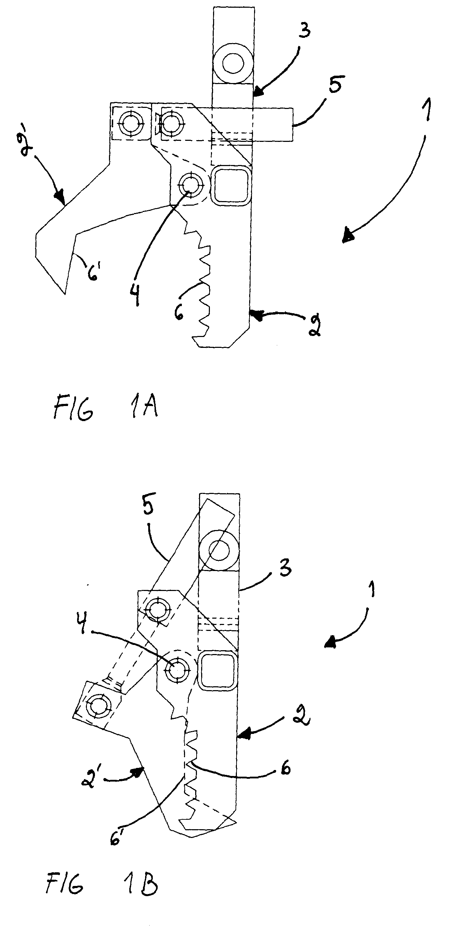

Figure 1B shows the gripping means 1 according to the Figure 1A in 'closed' position. The gripping surfaces 6, 6' of the jaws 2, 2' are arranged against each other, possibly partly interlocked, by moving the jaw 2' around the joint 4 towards the jaw 2 by means of the cylinder 5. When gripping the stump to be handled, the jaws 2, 2' are not pressed as close to each other as it is shown in Figure 1 B, but they are arranged around the stump to be handled.

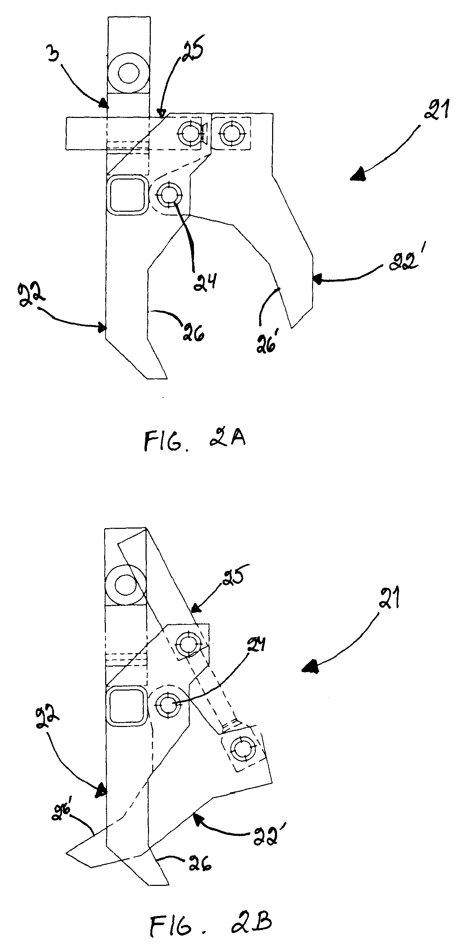

Figure 2A shows the gripping means of a device for handling stumps according to the invention in 'open' position. The cutting means 21 comprises the first jaw 22 and the second jaw 22'. The jaws 22, 22' are arranged with sharpened cutting surfaces 26, 26' at their surfaces that are against each other. The first jaw 22 is arranged to the frame beam 3 of the device for handling stumps in a fixed manner. The jaws 22, 22' are joined to each other by means of a joint 24, whereby they can be moved in relation to each other towards each other. The second jaw 22' is arranged in a functional connection with the cylinder 25. Thus, the jaw 22' can be moved towards the jaw 22 around a joint 24 by means of the cylinder 25. In Figure 2A, the cutting means 21 is shown in 'open' position, where cutting surfaces 26, 26' of the jaws 22, 22' are as far from each other as possible. When cutting roots from a stump, the roots to be cut between the cutting surfaces 26, 26' of the jaws 22, 22', and the jaw 22' is moved towards the jaw 22 by means of the cylinder 25.

Figure 2B shows the cutting means according to Figure 2A in 'closed' position. The cutting surfaces 26, 26' of the jaws 22, 22' are arranged against each other partly interlocked, by moving the jaw 22' around the joint 24 towards the jaw 22 by means of the cylinder 25.

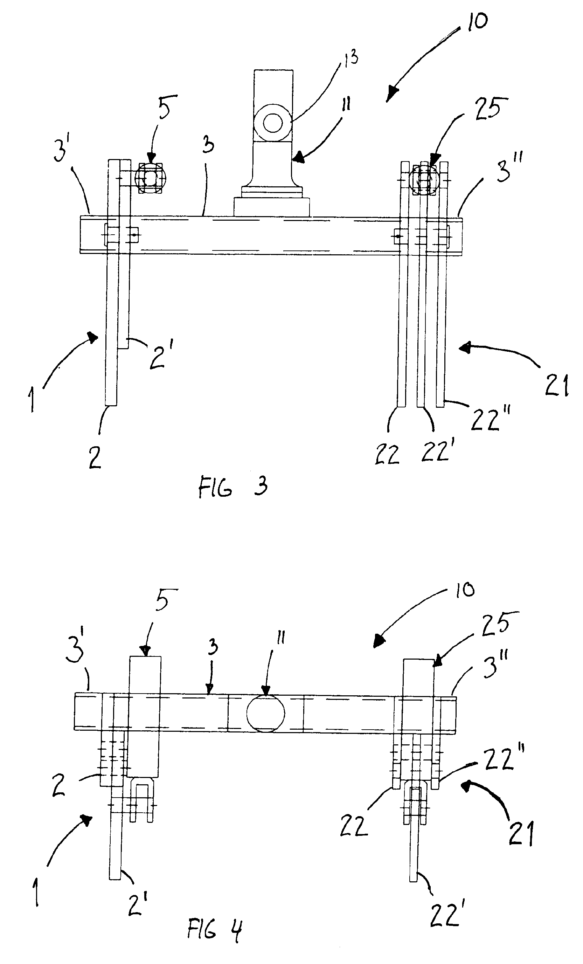

Figure 3 shows a device for handling stumps according to the invention as seen from the front. The device for handling stumps 10 comprises a frame beam 3, to a first end 3' of which the gripping means 1 are arranged and to a second end 3" of which the cutting means 21 are arranged. In connection with the frame beam 3, between the gripping means 1 and the cutting means 21, a rotator 11 has been arranged by means of which the device for handling stumps 10 can be rotated in relation to the stump to be handled and/or to the machine to which the device for handling stumps 10 is coupled. The rotator 11 enables moving of the device for handling stumps in horizontal level. A universal joint 13 enables moving of the device for handling stumps also in vertical level.

In Figure 3, the gripping means 1 comprise two jaws 2, 2'. The jaw 2, has been arranged immovable in relation to the beam 3, and the jaw 2' that has been arranged next to it, is moved by means of the cylinder 5. The cutting means 21 comprise three jaws 22, 22', 22", one of which is moved by means of the cylinder 25. The jaws 22 and 22" have been arranged immovable in relation to the beam 3, and the jaw 22' that has been arranged between them, is moved by means of the cylinder 5.

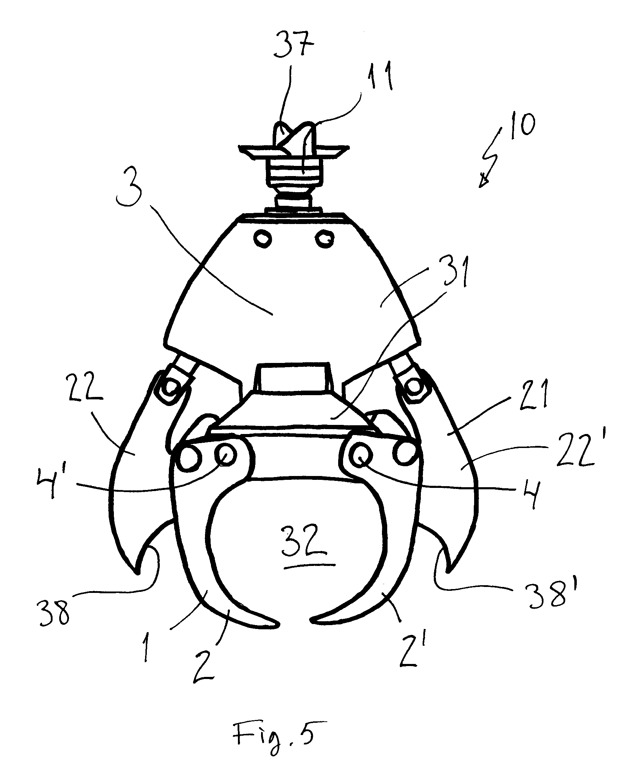

Figure 4 shows a device for handling stumps according to Figure 3 as seen from above.

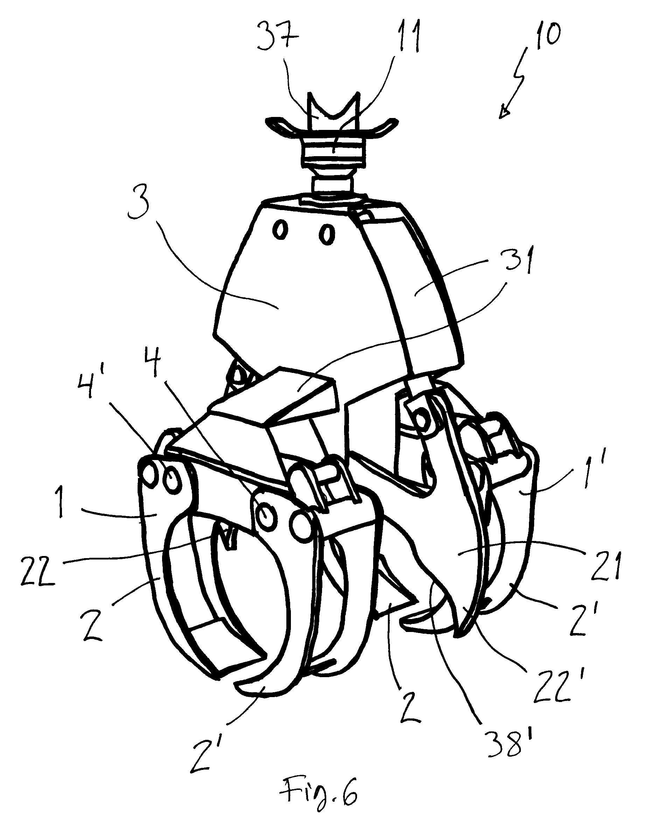

Figures 5 and 6 show another device for handling stumps according to the invention. The device 10 comprises two gripping means 1 and 1' attached to the frame 3, and cutting means 21 arranged between them. Both gripping means include two jaws 2 and 2' arranged movable in relation to the frame 3. The jaws can be moved towards each other and away from each other around the joints 4 and 4'. Hydraulic cylinders, by means of which power for moving the jaws is produced, have been attached to the jaws. Hydraulic cylinders as well as other technicalities have been protected under a cover 31 of the device. The cutting means 21 also include two jaws 22 and 22' arranged movable in relation to the frame 3 and each other by means of the hydraulic cylinders. The jaws 22 and 22' are sharpened at the surfaces 38 and 38' meant to be against each other. The control means for the hydraulic cylinders of the gripping means 1 and 1' and the cutting means 21 have been arranged so that the movement of each actuator pair 1, 1', 21 between the 'open' position and the 'closed' position can be controlled separately irrespective of other actuator pairs. Coupling means 37 have been arranged in connection with the frame 3 for coupling the handling device to a working machine. Connections, such as hydraulic hoses and electric conductors required by the device, can be led via the coupling means 37. A rotator 11 has also been arranged in connection with the frame 3, by means of which rotator the device for handling stumps 10 can be turned in relation to the stump to be handled and/or to that machine whereto the device for handling stumps 10 has been coupled. A vibrator can be arranged in connection with the coupling means 37 or the rotator 11, by means of which vibrator the device 10 and the stump therein can be vibrated.

In both devices for handling stumps of the figures, their actuators, that is the gripping means and the cutting means, are placed in parallel with respect to their working positions. This means that the movably arranged jaws of different actuators are arranged to be moved around parallel axes 4. It is seen, for example, in Figure 5 that the spaces left between the jaws of the gripping means 1,1' and the cutting means 21 are in the same line. An empty space 32 is seen between the jaws, in which space a stump is easy to place and where it can be easily worked.

Figures show only some preferred exemplary embodiments according to the invention. It is apparent to the man skilled in the art that the invention is not limited exclusively to the examples described above, but that it can vary within the frames of the claims presented below. The dependent claims present some possible embodiments of the invention, and they are not to be considered to restrict the scope of protection of the invention as such.

## Claims

1. Device for handling stumps (10) comprising a frame (3) and, attached thereto,
- coupling means (37) for coupling the handling device to a work machine,
- a rotator (11) for turning the handling device in relation to the work machine,
- first gripping means (1) for gripping a stump,
- first cutting means (21), which are arranged at a distance from the first gripping means,
- power means (5, 25) for directing operating power from outside the handling device to the first gripping means and to the first cutting means.

2. Device for handling stumps according to claim 1, **characterized in that** it comprises a vibrator, which is arranged to vibrate a trunk and/or the gripping means.

3. Device for handling stumps according to claim 1 or 2, **characterized in that** it comprises transfer means for transferring the gripping means and/or the cutting means in relation to each other and/or the frame.

4. Device for handling stumps according to claim 1, 2 or 3, **characterised in that** it comprises second cutting means (21).

5. Device for handling stumps according to any of the preceding claims, **characterized in that** it comprises second gripping means (1') for gripping a stump.

6. Device for handling stumps according to any of the preceding claims, **characterized in that** the cutting means are scissor means (21) that are arranged to be used by the power means.

7. Device for handling stumps according to any of the preceding claims, **characterized in that** the gripping means and/or the cutting means are placed in parallel with regard to their working positions.

8. Method for handling stumps, in which stumps that have been extracted from the ground are transferred to a stump transport device by means of a handling device (10) coupled to a work machine, **characterized in that** in the method:
- a stump is gripped by a gripping means (1) of the handling device,
- parts of root that are meant to be removed from the stump, are cut by means of a cutting blade (38) in the handling device,
- the part of the stump held by the gripping means of the handling device is transferred to the stump transport device.

9. Method according to claim 8, **characterized in that** in the method
- a butt part of the stump is split into several pieces by a cutting blade (38).

10. Method according to claim 8 or 9, **characterized in that** in the method
- thin parts of roots, less than 10 cm of thickness, advantageously less than about 5 cm, are cut from the stump.

11. Method according to claim 8, 9 or 10, **characterized in that** in the method
- the part of the stump held by the gripping means of the handling device is moved while it is against the ground, levelling thus unevenness of the ground, such as a pit remaining in the place of the extracted stump.

12. Method according to any of the preceding claim 8-11, **characterized in that** in the method
- the stump is placed between pliers means (2, 2') of the handling device,
- the stump is gripped by moving the pliers means a first distance towards each other,
- the stump is lifted while supported by the pliers means,
- parts of root that are meant to be removed from the stump, are cut by moving the pliers means further towards each other.

13. Method according to any of the preceding claim 8-12, **characterized in that** in the method
- a frame and/or the gripping means of the handling device is/are vibrated by a vibrator mounted on the device.
